# EUROPEAN PATENT SPECIFICATION

(11) **EP 1 540 213 B1**
(45) Date of publication and mention of the grant of the patent: **15.02.2006**
(21) Application number: 03771504.2
(22) Date of filing: 30.06.2003
(51) Int. Cl.: F16K 5/06, F16K 5/20

(54) **BALL VALVE**
KUGELVENTIL
CLAPET A BILLE

(30) Priority: 01.07.2002 NO 20023197
(43) Date of publication of application: 15.06.2005
(73) Proprietor: Aker Valves AS, 5405 Stord (NO)
(72) Inventor: LEKNES, Ottar, Arne, N-5415 Stord (NO)
(74) Representative: Briddes, Sam
(86) International application number: PCT/NO2003/000223
(87) International publication number: WO 2004/011832

(56) References cited:
- WO-A1-00/50792
- WO-A1-91/14891

## Description

The present invention relates to a ball valve comprising a valve housing with an inlet and an outlet opening together with a ball-shaped inner valve body which can be rotated in the valve housing between an open and a closed position. In the open position the valve body has a through-going opening connecting the valve housing's inlet and outlet openings. In the closed position the valve body blocks the throughflow.

Ball valves of the above-mentioned type are used in a great many applications from ordinary piping for drinking water to more sophisticated oil and gas plants, either on land or on offshore installations. Valves of this type are employed for regulating the flow of both gas and liquid.

One of the advantages of the valve is its ease of operation, which is often suitable for operation with a remotely controlled actuator while providing a good seal in a closed position.

With such valves, however, there may be a problem with sealing them in a closed position at high pressure. This applies particularly if a great pressure difference arises over the ball, thus causing it to be displaced by the pressure and thereby deforming any seals or the actual material in the valve housing or the valve body.

In order to remedy sealing problems at high pressure, various improvements and adaptations of known ball valves have been initiated. From the applicant's own patent application WO 91/14891 a method is known involving tilting the seats in the valve housing and the sealing surfaces on the ball-shaped valve body, thus enabling them to meet easily and to achieve a wedge effect when the tilted surfaces meet in the closed position.

From WO 00/50792 it is also known for the seat in the valve housing and in the sealing surface on the ball-shaped valve body to have different curved shapes, thereby sealing with elliptical contact.

However, there are still problems associated with sealing, e.g. with gas at a pressure of 350 bar on one side of the valve. It is therefore an object of the present invention to provide a solution which further tackles the problems of sealing, particularly where there is high pressure on one side of the valve. It is therefore an object to provide a solution where the pressure facilitates the sealing in such a manner that higher pressure provides a better seal as opposed to previously where higher pressure upstream in the fluid flow direction through the valve has increased the chances of leakage. In addition it is desirable to employ the wedge effect mentioned in WO 91/14891 to promote sealing while it is more desirable to employ the pressure in the surrounding fluid to promote sealing than to employ elliptical contact as in WO 00/50792.

The present invention is therefore produced on the basis of WO 91/14891.

A further object of the present invention is to provide a ball valve with increased resistance to leakage. In previous solutions, a leak in the seal on one side of the valve will result in the valve housing round the valve body being filled with pressurised fluid and if an additional seal breaks down, this makes the whole valve leaky, as for example in WO 00/50792 where a packing is mounted in a groove in the seat ring for sealing on each side of the valve. In order to solve this problem of leakage, according to the present invention several seals (2 on each side in the preferred embodiment) are provided in order to provide a further safeguard against leakage.

For this purpose a ball valve according to the present invention is provided comprising a valve housing with oppositely mounted inlet and outlet openings, each provided with an internal seat, which seats are parallel and tilted relative to the longitudinal axis through the inlet and outlet opening, together with a ball body, which is mounted internally in the valve housing and which is rotatable in the valve housing between an open and a closed position, which ball body has a through-going opening and two opposite, curved sealing surfaces provided in an area of the ball body in such a manner that in the closed position the sealing surfaces are in contact with the seat at the inlet and outlet opening respectively, and where in the open position the ball body's through-going opening is connected with the valve housing's inlet and outlet opening and where in the closed position the ball body's sealing surfaces block the valve housing's inlet and outlet openings. According to the present invention the ball valve is characterised in that the internal seat in the inlet and outlet opening internally in the valve housing consists of an inner seat ring and an outer seat ring respectively, which inner seat ring has a sealing seat surface which in the ball body's closed position is in sealing contact with the ball body's sealing surfaces and the outer sealing ring has a lip which on the outside of the contact surface between the sealing seat surface and the sealing surfaces is curved or tilted against the contact surface between the sealing seat surface and the sealing surfaces and where in an unloaded condition when the ball body is in the open position, the length of the lip on the outer seat ring is such that the lip protrudes for a distance inside the area of the valve housing in which the sealing surfaces are located in the closed position, with the result that during movement from the open to the closed position, the ball body meets the lip on the outer seat rings, bending it so that it assumes a prestressed condition during contact with the sealing surfaces.

In different embodiments, the distance the lip protrudes into the housing inside the ball body's position is adapted in such a manner that bending the lip produces a level of tension in the material of the lip which does not result in permanent deformation.

The inlet and outlet openings are preferably concentrically arranged along the longitudinal axis through the openings.

The inner seat ring has an external flange. This external flange is located between and in abutment against the outer seat ring and the valve housing, and the inner seat ring is thereby held in position in the axial and radial direction.

Due to its shape the inner seat ring also acts as a stop element for the valve body (the ball body). A wedge effect is obtained between the ball body and the inner seat ring, thus stopping the ball body's progress towards the outer seat ring before the outer seat ring's lip has been permanently deformed.

The inner seat ring acts here as a seal, particularly downstream in the valve housing and, together with the prestressing, uses the load from the system pressure for sealing.

The greatest difference from previously known solutions, however, is to be found in the sealing, which will ensure that no leakages occur upstream, i.e. on the side of the valve housing facing the pressure. When the pressure difference between the upstream side of the valve and the interior of the valve housing exceeds a specific limit, (which varies with the materials and the design of the valve), the valve body (ball body) and the valve housing start to become deformed away from the seal (seat), towards the downstream side. This will also influence the outermost seat ring and it will follow the ball body on account of its shape, which provides pressure internally in the ring over an area that is effective from the contact surface between the sealing surface on the ball body and the outermost seat ring into the packing located behind the same seat ring, preventing leakage to the valve housing via the back of the seat ring. The lip on the outer seat rings will do this on account of their shape (curved or tilted) and their length which provides a prestressing during closing of the valve to the closed position.

Furthermore, each of the sealing surfaces on the ball body has an inclination corresponding to the inclination of the seat in the valve housing. To achieve this, the ball body in the preferred embodiment is provided with a different machining axis for each of the curved sealing surfaces. The machining axes are substantially perpendicular to the parallel planes formed by the seat rings. In addition the machining axes for each of the sides of the ball body are parallel.

This is preferred since, amongst other things, it provides the desired sealing geometry in a ball valve according to the present invention.

An embodiment of the present invention is further illustrated in the attached figures, in which:
fig. 1 illustrates a ball valve assembly according to the present invention;
fig. 2 illustrates the assembly and details of the same ball valve as in fig. 1;
fig. 3 illustrates in cross section, plan view and section the inner seat ring in the ball valve illustrated in figs. 1-2 placed in a JIG (a JIG is an aid to machining/working of seats in valves);
fig. 4 illustrates in cross section, plan view and section the outer seat ring in the ball valve illustrated in figs. 1-2, placed in a JIG;
fig. 5 illustrates in cross section, plan view and section the inner seat ring in the ball valve illustrated in figs. 1-2;
fig. 6 illustrates in cross section, plan view and section the outer seat ring in the ball valve illustrated in figs. 1-2.

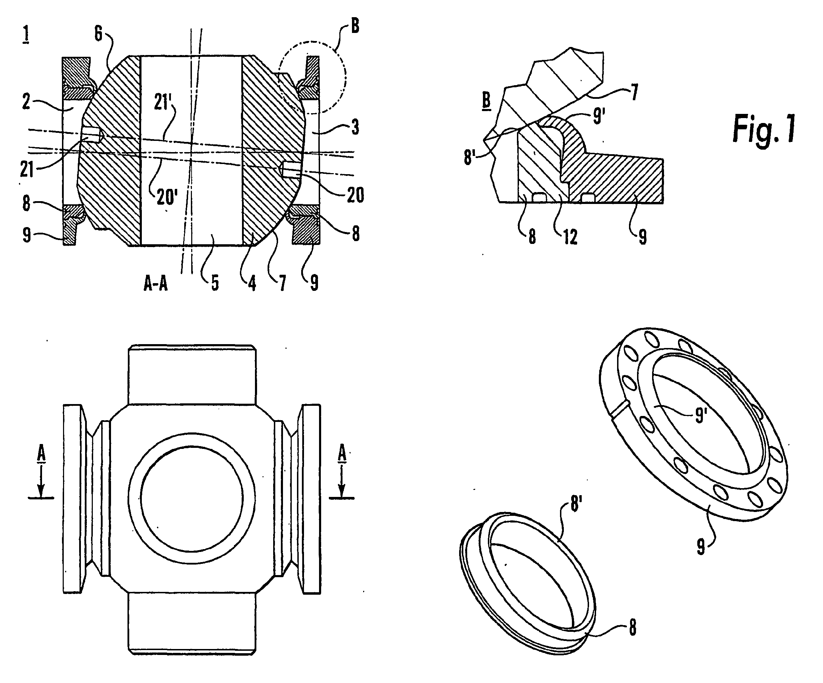

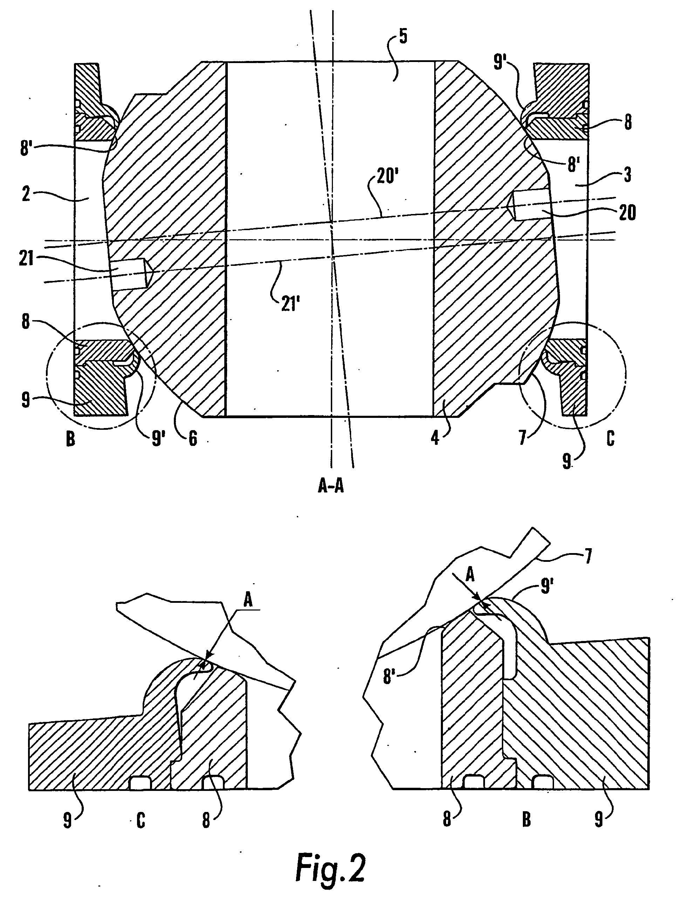

Figures 1 and 2 illustrate a ball valve assembly in section from the side, which ball valve consists of a valve housing 1 with an outlet and an inlet opening 2,3, where the valve body (the ball body) 4 is in the closed position in the valve housing 1. According to the invention, in the housing 1 there is mounted a seat consisting of an inner seat ring 8 and an outer seat ring 9. The inner seat ring 8 has a lower flange 12. The lower external flange 12 is located in abutment against the outer seat ring 9. The inner seat ring 8 is thereby held in position axially and radially, the flange 12 and the inner seat ring 8 being pressed against the valve housing by the outer seat ring 9 when it is mounted on the valve housing 1.

The ball body 4 has a through-going opening 5. The ball body also has sealing surfaces 6 and 7 which in the closed position abut against the seat 8,9 on each side of the valve housing, i.e. against each of the openings 2,3 in the housing 1. The sealing surfaces have a curved shape and are provided symmetrically about a machining line 20' and 21'. The machining lines 20' and 21' are located perpendicularly to the inclined plane formed by each of the tilted seats 8,9. In the figures a 5 degree deviation is indicated from the longitudinal axis through the ball body.

The machining axis 20' is the centre axis for the sealing surface 6 on the left side (on the opposite side) of the ball body with the opening 20 for mounting in a rotating machining tool. Similarly the machining axis 21' is the centre axis for the sealing surface 7 on the right side with the opening 21 for mounting in a rotating machining tool.

The result is that the wedge effect desired to be achieved by the solution according to the invention, is achieved.

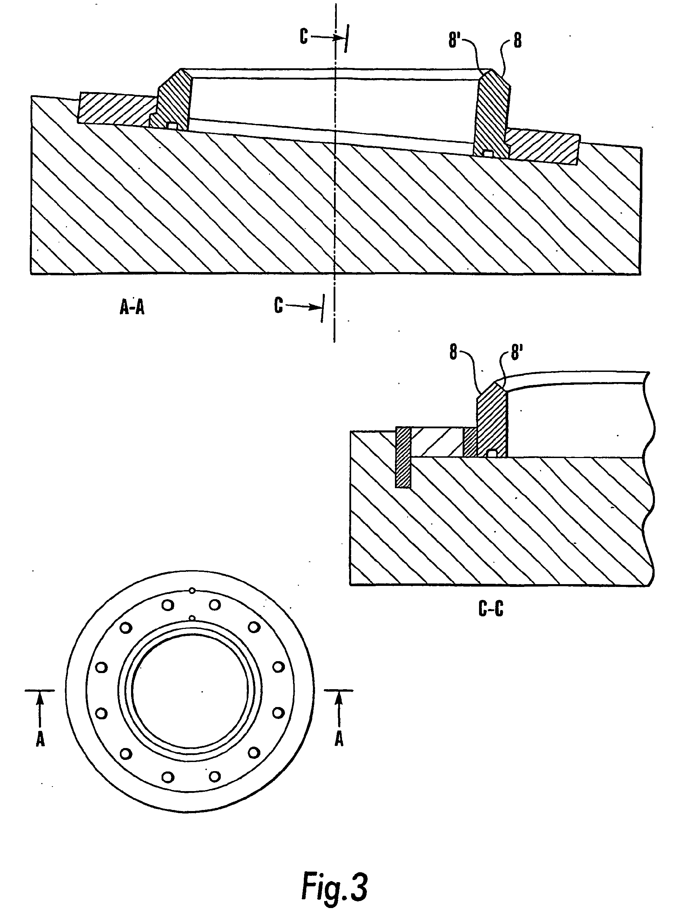

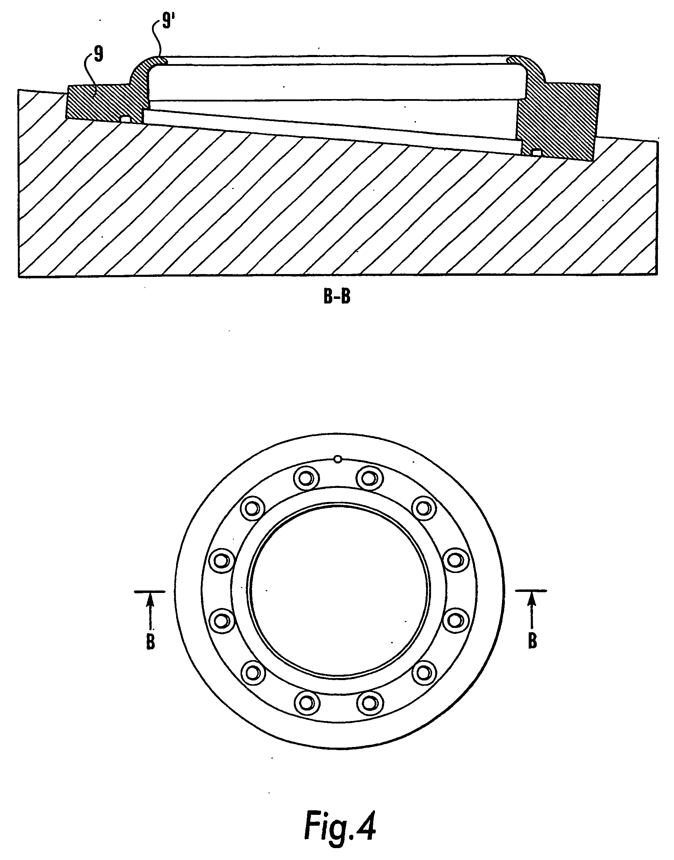

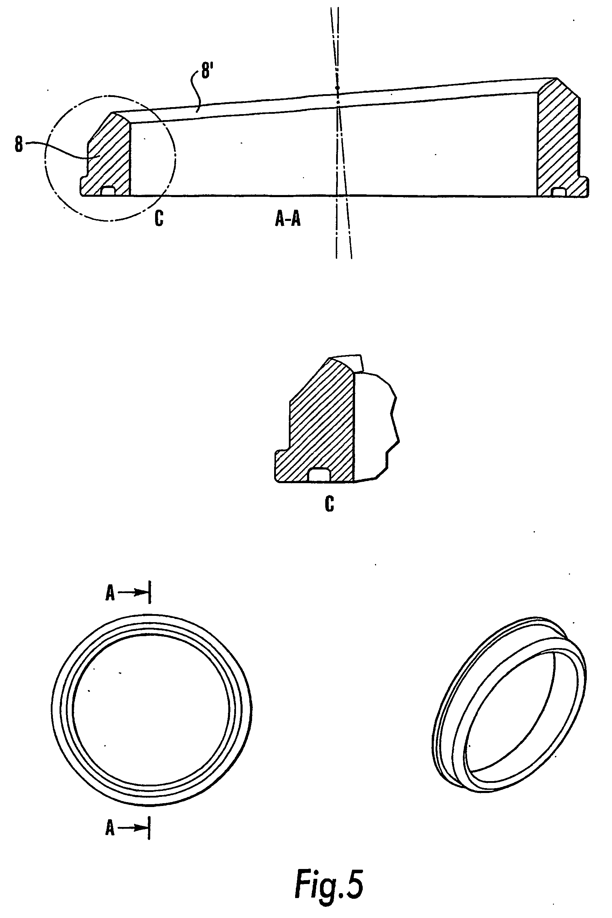

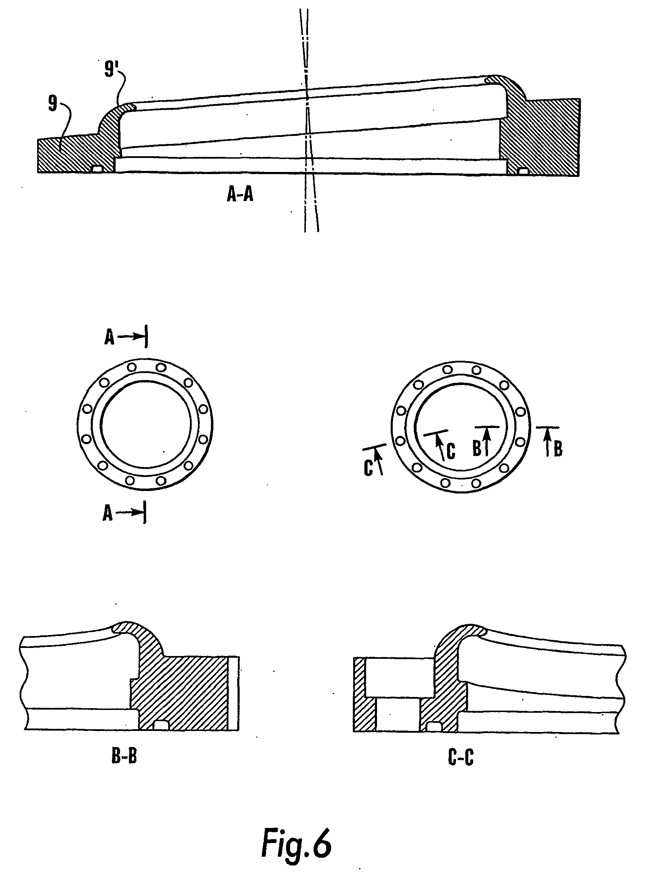

Furthermore, the inner seat ring 8 with the sealing surface 8' seals against the sealing surfaces 6 and 7 as mentioned above and illustrated in figures 1-6.

In addition, the outer seat ring 9 according to the present invention is illustrated in figures 1-6. The seat ring 9 has a forwardly protruding lip 9', which is illustrated in the embodiment with a curved shape. The length of the lip in an uninfluenced condition (with the ball body in the open position) is such that the lip protrudes a distance A into the part of the valve housing's cavity where the ball body is located in the closed position. When the ball body is then in the closed position, the lip's outermost point is bent down a corresponding distance A and the lip is prestressed according to the invention. This assists substantially in the sealing process. When high pressure upstream of the valve then pushes fluid past the inner seat ring, this fluid will then settle under the lip 9' (which holds the seal longer due to the prestressing) and the pressure will hereby press the lip against the sealing surface 6,7 of the ball body. The pressure against the sealing surface will increase with the pressure.

Figures 1-6 illustrate a practical embodiment but the values are only examples and neither absolute values nor the relationship between different values are decisive for the invention beyond what is stated in the description and claims. The relationship between axes and planes, however, is indicated in greater detail in the figures.

## Claims

1. A ball valve comprising a valve housing (1) with oppositely mounted inlet and outlet openings (2,3), each of which is provided with an internal seat, which seats are parallel and tilted relative to the longitudinal axis through the inlet and outlet opening, together with a ball body (4), which is mounted internally in the valve housing and which is rotatable in the valve housing (1) between an open and a closed position, which ball body has a through-going opening (5) and two opposite, curved sealing surfaces (6,7) provided in an area of the ball body in such a manner that in the closed position the sealing surfaces (6,7) are in contact with the seat at the inlet and outlet opening respectively, and where in the open position the ball body's (4) through-going opening (5) is connected with the valve housing's (1) inlet and outlet opening and where in the closed position the ball body's (4) sealing surfaces (6,7) block the valve housing's (1) inlet and outlet openings (2.3), **characterised in that** the internal seat in the inlet and outlet opening internally in the valve housing consists of an inner seat ring (8) and an outer seat ring (9) respectively, which inner seat ring (8) has a sealing seat surface (8') which in the ball body's closed position is in sealing contact with the ball body's sealing surfaces (6,7) and the outer seat ring (9) has a lip (9') which on the outside of the contact surface between the sealing seat surface (8') and the sealing surfaces (6,7) is curved or tilted against the contact surface between the sealing seat surface (8') and the sealing surfaces (6,7) and where in an unloaded condition when the ball body is in the open position, the length of the lip (9') on the outer seat ring (9) is such that the lip (9') projects for a distance (A) inside the area of the valve housing in which the sealing surfaces (6,7) are located in the closed position, with the result that during movement from the open to the closed position, the ball body meets the lip (9') on the outer seat ring (9), bending it so that it assumes a prestressed condition during contact with the sealing surfaces (6,7).

2. A ball valve according to claim 1,
**characterised in that** the distance (A) is adapted in such a manner that the bending of the lip (9') produces a level of tension in the material of the lip (9') that does not result in permanent deformation.

3. A ball valve according to claim 1,
**characterised in that** the inlet and outlet openings (2,3) are concentrically arranged along the longitudinal axis through the openings (2,3).

4. A ball valve according to one or more of the preceding claims,
**characterised in that** the inner seat ring (8) has an external flange (12), one side of which abuts against the outer seat ring (9) and its other side abuts against the valve housing.

## Patentansprüche

1. Kugelventil, das ein Ventilgehäuse (1) mit einer Einlass- und einer Auslassöffnung (2, 3), die einander gegenüberliegend angebracht sind, wobei jede von ihnen mit einem inneren Sitz versehen ist und die Sitze parallel und relativ zu der Längsachse durch die Einlass- und die Auslassöffnung geneigt sind, zusammen mit einem Kugelkörper (4) umfasst, der im Inneren des Ventilgehäuses angebracht ist und der in dem Ventilgehäuse (1) zwischen einer offenen und einer geschlossenen Position gedreht werden kann, wobei der Kugelkörper eine durchgehende Öffnung (5) und zwei einander gegenüberliegende gekrümmte Dichtungsflächen (6, 7) aufweist, die in einem Bereich des Kugelkörpers so vorhanden sind, dass in der geschlossenen Position die Dichtungsflächen (6, 7) in Kontakt mit dem Sitz an der Einlass- bzw. der Auslassöffnung sind, in der offenen Position die Durchgangsöffnung (5) des Kugelkörpers (4) mit der Einlass- und der Auslassöffnung des Ventilgehäuses (1) verbunden ist, und in der geschlossenen Position die Dichtungsflächen (6, 7) des Kugelkörpers (4) die Einlass- und die Auslassöffnung (2, 3) des Ventilgehäuses (1) versperren, **dadurch gekennzeichnet, dass** der innere Sitz in der Einlass- und der Auslassöffnung im Inneren des Ventilgehäuses aus einem inneren Sitzring (8) bzw. einem äußeren Sitzring (9) besteht, wobei der innere Sitzring (8) eine dichtende Sitzfläche (8') hat, die in der geschlossenen Position des Kugelkörpers in Dichtungskontakt mit den Dichtungsflächen (6, 7) des Kugelkörpers ist, und der äußere Sitzring (9) eine Lippe (9') hat, die an der Außenseite der Kontaktfläche zwischen der dichtenden Sitzfläche (8') und den Dichtungsflächen (6, 7) an die Kontaktfläche zwischen der dichtenden Sitzfläche (8') und den Dichtungsflächen (6, 7) gekrümmt oder geneigt ist, und wobei in einem unbelasteten Zustand, wenn sich der Kugelkörper in der offenen Position befindet, die Länge der Lippe (9') an dem äußeren Sitzring (9) so ist, dass die Lippe (9') über eine Strecke (A) in das Innere des Bereiches des Ventilgehäuses hinein vorsteht, in dem sich die Dichtungsflächen (6, 7) in der geschlossenen Position befinden, so dass während Bewegung aus der offenen in der geschlossenen Position der Kugelkörper auf die Lippe (9') an dem äußeren Sitzring (9) trifft und sie so biegt, dass sie bei Kontakt mit den Dichtungsflächen (6, 7) einen vorgespannten Zustand einnimmt.

2. Kugelventil nach Anspruch 1,
**dadurch gekennzeichnet, dass** der Abstand (A) so eingerichtet ist, dass das Biegen der Lippe (9') ein Maß an Spannung in dem Material der Lippe (9') erzeugt, das nicht zu dauerhafter Verformung führt.

3. Kugelventil nach Anspruch 1,
**dadurch gekennzeichnet, dass** die Einlass- und die Auslassöffnungen (2) konzentrisch entlang der Längsachse durch die Öffnungen (2, 3) hindurch angeordnet sind.

4. Kugelventil nach einem oder mehreren der vorangehenden Ansprüche,
**dadurch gekennzeichnet, dass** der innere Sitzring (8) einen äußeren Flansch (12) hat, wobei eine Seite desselben an dem äußeren Sitzring (9) anliegt und seine andere Seite an dem Ventilgehäuse anliegt.

## Revendications

1. Un clapet à bille, comprenant un boîtier de clapet (1) comprenant des ouvertures d'entrée et de sortie (2, 3) disposées à l'opposé, dont chacune est munie d'un siège intérieur, lesdits sièges étant parallèles et inclinés par rapport à l'axe longitudinal à travers l'ouverture d'entrée et de sortie, conjointement avec un corps de bille (4) monté intérieurement dans le boîtier de clapet et susceptible de tourner dans le boîtier de clapet (1) entre une position ouverte et une position fermée, ledit corps de bille ayant une ouverture traversante (5) et deux surfaces d'étanchéité (6, 7) incurvées opposées, prévues dans une zone du corps de bille de manière qu'à la position fermée, les surfaces d'étanchéité (6, 7) soient en contact avec le siège, sur l'ouverture d'entrée et de sortie respectivement, et qu'à la position ouverte, l'ouverture traversante (5) du corps de bille (4) soit connectée aux ouvertures d'entrée et de sortie du boîtier de clapet (1), et qu'à la position fermée, les surfaces d'étanchéité (6, 7) de corps de bille (4) bloquent les ouvertures d'entrée et de sortie (2, 3) du boîtier de clapet (1), **caractérisé en ce que** le siège intérieur, dans l'ouverture d'entrée et de sortie, intérieurement dans le boîtier de clapet, est formé d'une bague de siège intérieure (8) et d'une bague de siège extérieure (9) respectives, ladite bague de siège intérieure (8) présentant une surface de siège d'étanchéité (8'), qui, lorsque le corps de bille est à la position fermée, est en contact d'étanchéité avec les surfaces d'étanchéité (6, 7) du corps de bille, et la bague de siège extérieure (9) comprend une lèvre (9'), qui, à l'extérieur de la surface de contact, entre la surface du siège d'étanchéité (8') et les surfaces d'étanchéité (6, 7), est incurvée ou inclinée, par rapport à la surface de contact, entre la surface de siège d'étanchéité (8') et les surfaces d'étanchéité (6, 7), et dans lequel, lorsqu'on est à l'état non chargé, lorsque le corps de bille est à la position ouverte, la longueur de la lèvre (9') sur la bague de siège extérieure (9) est telle que la lèvre (9') fait saillie d'une distance (A) à l'intérieur de la zone du boîtier de clapet dans laquelle les surfaces d'étanchéité (6, 7) sont situées à la position fermée, avec comme résultat que, pendant le déplacement de la position ouverte à la position fermée, le corps de bille rejoint la lèvre (9') sur la bague de siège extérieur (9), la pliant de manière qu'elle prenne un état précontraint, durant le contact avec les surfaces d'étanchéité (6, 7).

2. Un clapet à bille, selon la revendication 1,
**caractérisé en ce que** la distance (A) est adaptée de manière que la flexion de la lèvre (9') produise, dans le matériau de la lèvre (9'), un niveau de tension mécanique qui ne produise pas de déformation permanente.

3. Un clapet à bille, selon la revendication 1,
**caractérisé en ce que** les ouvertures d'entrée et de sortie (2, 3) sont agencées concentriquement dans l'axe longitudinal passant par les ouvertures (2, 3).

4. Un clapet à bille, selon l'une ou plusieurs des revendications précédentes,
**caractérisé en ce que** la bague de siège intérieure (8) présente une bride extérieure (12), dont une face bute contre la bague de siège extérieure (9) et son autre face bute contre le boîtier de soupape.
